# EUROPÄISCHE PATENTSCHRIFT

(11) **EP 2 601 000 B1**
(45) Veröffentlichungstag und Bekanntmachung des Hinweises auf die Patenterteilung: **25.11.2020**
(21) Anmeldenummer: 11819446.3
(22) Anmeldetag: 05.08.2011
(51) Int. Cl.: B23B 27/18, B23C 5/18, B23D 77/02, B23G 5/00

(54) **SPANABHEBENDES WERKZEUG UND VERFAHREN ZU DESSEN HERSTELLUNG**
MACHINING TOOL AND METHOD FOR PRODUCING SAME
OUTIL D'USINAGE PAR ENLÈVEMENT DE COPEAUX ET PROCÉDÉ POUR LE PRODUIRE

(30) Priorität: 05.08.2010 DE 102010036874
(43) Veröffentlichungstag der Anmeldung: 12.06.2013
(73) Patentinhaber: Gühring KG, 72458 Albstadt (DE)
(72) Erfinder: BOZKURT, Lutfi, 72474 Winterlingen (DE)
(74) Vertreter: Winter, Brandl, Fürniss, Hübner, Röss, Kaiser, Polte - Partnerschaft mbB
(86) Internationale Anmeldenummer: PCT/DE2011/001555
(87) Internationale Veröffentlichungsnummer: WO 2012/025091

(56) Entgegenhaltungen:
- EP-A1- 0 054 510
- WO-A1-98/01250
- WO-A1-98/57771
- WO-A2-2009/023244
- DE-A1- 1 552 450
- DE-A1- 10 316 584
- DE-A1- 10 359 854
- DE-A1- 19 635 889
- DE-A1-102005 034 422
- DE-U1-202005 000 994
- JP-A- S6 138 804
- US-A1- 2007 084 315

## Beschreibung

Die Erfindung betrifft ein spanabhebendes Werkzeug, wie z.B. ein Dreh-, Bohr-, Fräs- oder Reibwerkzeug, mit zumindest einem plattenförmigen Schneideinsatz , der zumindest abschnittsweise aus schlag- und/oder verschleißfestem Schneidstoff, wie z.B. polykristalliner Diamant (PKD), Cubic Boron Nitride (CBN), CVD-Diamant oder einem Cermet-Werkstoff, besteht und über eine Kontaktflächenanordnung unverrückbar mit einem Schneidenträger direkt über eine Klebeschicht verklebt ist, gemäß dem Oberbegriff des Anspruchs 1, sowie auf ein Verfahren zur Herstellung eines solchen Werkzeugs.

Solche platten- oder plättchenförmigen Schneideinsätze werden herkömmlich dort eingesetzt, wo es darauf ankommt, mit hohen Schnittgeschwindigkeiten zu arbeiten und trotzdem gute Standzeiten zu realisieren und/oder eine besondere Oberflächengüte und Maßgenauigkeit zu erzielen.

Die Fixierung dieser Schneideinsätze an einem Schneidenträger erfolgt herkömmlich über eine Kontaktflächenanordnung, die vorzugsweise so ausgebildet ist, dass beim endgültigen Fixierungsvorgang eine maßgenaue Ausrichtung des Schneideinsatzes zum Schneidenträger erfolgen kann. Um diese maßgenaue Ausrichtung zuzulassen und um die Beanspruchung der Schneideinsätze, die oftmals nur eine Plättchenstärke von 1 bis 2 mm haben, beherrschbar zu halten, hat man bislang derartige Schneideinsätze mit dem Schneidenträger verlötet.

Soweit bereits früher angedacht worden war (vgl. z.B. DE 199 03 276 A1 oder DE 299 01 414 U1), Schneideinsätze zu verkleben, musste der aus Hart-Schneidstoff bestehende Schneideinsatz auf einer gesonderten Auflage angebracht und dann als Verbundplatte mit dem Schneidenträger verbunden werden, was zu einem vergrößerten Herstellungsaufwand und zu Problemen bei der maßgenauen Ausrichtung führt. Außerdem musste somit die Stärke des Schneideinsatzes vergrößert werden, wodurch das Einsatzgebiet der Schneideinsätze stark eingeschränkt wird.

Um ein Schneidwerkzeug für unterschiedlichste Anwendungsgebiete mit beliebiger Geometrie und Größe des Schneideinsatzes nicht nur einfacher, sondern auch mit größerer Maßhaltigkeit herstellen zu können, ohne die Standzeit des Werkzeugs zu beeinträchtigen, ist aus dem Dokument DE 20 2005 000 994 U1 ist ein gattungsgemäßes Werkzeug bekannt, bei dem der Schneideinsatz direkt mit der Kontaktflächenanordnung verklebt wird. Weil der Verfahrensschritt des Einlötens wegfällt, kann der Schneideinsatz mit geringerem Aufwand und mit guter Genauigkeit am Schneidenträger bzw. am Werkzeug positioniert werden. Denn es ist nicht mehr erforderlich, den Schneideinsatz unter Aufrechterhaltung eines vorbestimmten Lötspalts zu positionieren. Die Positionierungsgenauigkeit des Schneideinsatzes wird zusätzlich dadurch angehoben, dass der Klebe-Verbindungsvorgang bei Temperaturen stattfinden kann, die - selbst wenn eine Thermo-Klebefolie zur Anwendung kommt - erheblich unter der bislang erforderlichen Löttemperatur liegen. Die Gefahr von thermisch bedingtem Maß-Verzug und/oder von sogenannten "eingefrorenen" Spannungen ist damit beseitigt. Auch hinsichtlich der Form und der Lage der Kontaktflächen, über die eine Verbindung erfolgen soll, ist man beim erfindungsgemäßen Werkzeug freier, da es auf das Flussverhalten des Lötwerkstoffs nicht mehr ankommt.

Es hat sich gezeigt, dass die aus dem Dokument DE 20 2005 000 994 U1 bekannten Werkzeuge mit geklebten Schneideinsätzen in erster Linie dann mit ausreichender Prozesssicherheit arbeiten, wenn sehr dünne und große Schneideinsatzplättchen direkt und flächig mit dem Schneidenträger verklebt werden. Sobald die Schneide jedoch einen größeren Abstand von der Auflagefläche hat, z.B. dann, wenn z.B. bei Fräswerkzeugen dickere Schneideinsätze verwendet werden müssen, oder wenn die Schneiden wie z.B. bei Reibahlen oder Bohrungs-Nachbearbeitungswerkzeugen eine beträchtliche axiale Erstreckung haben, ist es schwierig, die Standzeit auf einem ausreichend hohen Niveau zu halten. Dies schränkt das Einsatzgebiet ein.

Aus dem Dokument EP 0 054 510 A1 ist ein Werkzeug bekannt geworden, bei dem Schneideinsätze mit einem Werkzeug-Grundkörper in Nuten verleimt werden.

Aus der DE 10 2005 034 422 A1 ist ein Werkzeug gemäß dem Oberbegriff des Anspruchs 1 in der Ausgestaltung als Reibahle bekannt geworden, bei der eine Messerplatte und die Führungsleisten in Nuten eingesetzt und durch ein Klebeverfahren befestigt werden.

Der Erfindung liegt deshalb die Aufgabe zugrunde, ein gattungsgemäßes Werkzeug in der Weise weiter zu bilden, dass sein Einsatzgebiet erweitert und gleichzeitig seine Herstellung wirtschaftlicher gestaltet werden kann.

Diese Aufgabe wird durch die Merkmale des Anspruchs 1 gelöst. Ein besonders wirtschaftliches Herstellungsverfahren für das erfindungsgemäße Werkzeug ist Gegenstand des Anspruchs 14.

Erfindungsgemäß übernimmt nach wie vor eine Grundfläche des Prismas im Zusammenwirken mit einer ebenen Auflagefläche des Schneideinsatzträgers () über die im Wesentlichen vollflächige Verklebung die hauptsächliche Stütz- und Fixierungsfunktion. Gleichzeitig wird jedoch eine an die Schneidkante bzw. Haupt-Schneidkante angrenzende Mantelflächenanordnung des Prismas dazu genutzt, die Lage der Schneide im Raum, d.h. bezüglich der Werkzeughalterung eindeutig, d.h. durch definierte Anlagepunkte, räumlich fest zu legen. Dies gelingt deshalb, weil sich der Schneideinsatz auf der Auflagefläche unter Zwischenschaltung des Klebstoffs problemlos verschieben lässt. Bei dieser Verschiebung gleitet ein der Schneidkante im Wesentlichen gegenüberliegender Abschnitt der Mantelflächenanordnung in eine Passungsnut des Schneideinsatzträgers, in der der Schneideinsatz schließlich fest, d.h. ohne Spiel gefangen bleibt. Auf diese Weise kann einem von der an der Hauptschneide einwirkenden-Schnittkraft hervorgerufenen Kippmoment wirksam entgegengewirkt werden. Dies entlastet die Klebeverbindung, zumal die Schnittkraft eine Schlag-, also Schwellkraft darstellt, die mit großer Frequenz auf die Schneide einwirkt. Die Passungsnut wirkt also wie eine Einspannstelle, mit der es gelingt, die Dauerfestigkeit der Fügeverbindung zwischen Schneideinsatz und Schneideinsatzträger wesentlich anzuheben. Die Geometrie des Schneideinsatzes ist auf diese Weise auch nicht mehr auf flache Schneidplatten beschränkt. Gleichzeitig ergibt sich der besondere Vorteil, dass die Dicke der Klebstoffschicht ohne Einbußen der Haftfestigkeit ohne Weiteres so klein gehalten werden kann, dass die Lage der Hauptschneide im Raum ohne deren Nachbearbeitung im vorgegebenen Toleranzbereich festliegt.

Es hat sich darüber hinaus gezeigt, dass die Klebstoffschicht - auch wenn deren Dicke in einem Bereich gehalten wird, der in der Größenordnung der Lagetoleranz für die Schneide, also im 1/100-stel mm-Bereich, gehalten wird - eine stoßdämpfende Wirkung hat, so dass Kraftspitzen, die an der Schneide und in der Passungsnut auftreten, wirksam geglättet werden. Hierdurch ergibt sich nicht nur eine größere Laufruhe und eine verringerte Schwingungsneigung des Werkzeugs, sondern gleichzeitig eine verbesserte Standzeit des Werkzeugs.

Von besonderem zusätzlichem Vorteil ist bei dem erfindungsgemäßen Werkzeug, dass der Schneideinsatz nach wie vor als Wendeplatte ausgeführt und damit mit verdoppelter Standzeit genutzt werden kann. Denn die Klebeschicht kann wesentlich einfacher als ein Lotwerkstoff vom bereits benutzten Schneideinsatz unter Beibehaltung der Form entfernt werden, so dass der Schneideinsatz nach dem Wenden mit unveränderter Lagegenauigkeit erneut am Schneidenträger fixiert werden kann.

Vorteilhafte Weiterbildungen sind Gegenstand der Unteransprüche.

Aufgrund der erfindungsgemäß verbesserten Krafteinleitung von der Schneide in den Schneideinsatzträger, kann der Schneidstoff aus einer vergrößerten Palette der Werkstoffe ausgewählt werden. Neben polykristallinem Diamant (PKD), Cubic Boron Nitride (CBN), CVD-Diamant oder einem Cermet-Werkstoff kann sogar ein faserverstärkter Kunststoff als Schneidstoff herangezogen werden. In diesem Fall kann das Zerspanungswerkzeug einen Schneidteil und einen den Schneidteil mit Schneideinsätzen tragenden Grundkörper haben. Der Schneidteil und der Grundkörper können einstückig miteinander verbunden sein, das Zerspanungswerkzeug kann also aus zunächst separat hergestellten Schneidteil und Grundkörper einstückig zusammengesetzt oder alternativ dazu aus einem Vollmaterial einstückig angefertigt sein. Der Schneidteil und der Grundkörper können aber auch lösbar miteinander verbunden sein, das Zerspanungswerkzeug kann also modular aufgebaut sein. Es hat sich gezeigt, dass die Klebetechnik in Verbindung mit der Passungsnut noch bessere Ergebnisse hinsichtlich Schneidenpositionierung und Dauerfestigkeit der Verbindung liefert, wenn der Schneideinsatzträger zumindest im Bereich der an der Verklebung und Fixierung teilhabenden Flächen aus faserverstärktem Kunststoff besteht.

Sowohl der Schneidkörper als auch der Grundkörper können jeweils einstückig ausgebildet sein. Der Schneidteil kann aber auch eine Vielzahl von Schneidkörpern, z. B. Schneidplatten oder Schneidleisten, aufweisen, die auf einem mit dem Grundkörper verbundenen Trägerkörper, z. B. auf einer eine Schneidplatte tragenden Kassette, angeordnet sind. Der Grundkörper, der den Schneidteil oder den vorgenannten Trägerkörper trägt und über den das Zerspanungswerkzeug in beispielsweise einer Werkzeugaufnahme eingespannt wird, kann ebenfalls einstückig oder mehrteilig aufgebaut sein.

Die Laufruhe und Standzeit kann dadurch noch erhöht werden, dass gemäß Anspruch 7 der Schneideinsatzträger und/oder eine die Schneide ausbildende Schneideinsatzschicht zumindest teilweise, vorzugsweise vollkommen, aus einem faserverstärkten Kunststoff gebildet ist. Ein Vorteil besteht darin, dass der aus unterschiedlichsten Werkstoffen - einschließlich CFK- oder CFC-Werkstoff - hergestellte Schneideinsatz in die Passungsnut unter Nutzung einer gewissen elastischen Verformung eingefügt und damit noch fester und lagegenauer eingespannt werden kann. Ein weiterer Vorteil ist darin zu sehen, dass der Schneideinsatzträger durch die Materialwahl einen weitere schwingungsdämpfenden Effekt liefert, was sich vorteilhaft auf die Kräfte auswirkt, die auf den Schneideinsatz und dessen Fügestelle einwirken.

Nach der Weiterbildung des Anspruchs 7 ist das Zerspanungswerkzeug selbst zumindest teilweise aus einem faserverstärkten Kunststoff hergestellt. Zumindest teilweise heißt in diesem Zusammenhang, dass es einstückig aus einem Körper aus faserverstärktem Kunststoff, z. B. einem stranggezogenen (pultrudierten) Rundstab, hergestellt ist, oder dass ein oder mehrere ausgewählte Funktionsabschnitte aus faserverstärktem Kunststoff hergestellt sind. Derartige Funktionsabschnitte sind Abschnitte, die die Funktion haben, bei der Zerspanung auftretenden Kräfte und/oder Drehmomente zwischen Schneidteil und Grundkörper zu übertragen. Derartige Funktionsabschnitte können somit der Grundkörper und/oder der Schneidteil sein. Daneben umfassen diese Funktionsabschnitte aber auch funktional oder baulich abgrenzbare Bestandteile des Grundkörpers und/oder Schneidteils, beispielsweise auf der Seite des Grundkörpers einen Schaftabschnitt oder auf der Seite des Schneidteils den oben genannten Trägerkörper, z. B. Kassette, bzw. die oben genannten Schneidkörper.

Durch die Verwendung eines faserverstärkten Kunststoffes, wofür insbesondere CFK (kohlenstofffaserverstärker Kunststoff) oder CFC (kohlenstofffaserverstärkter Kohlenstoff) geeignet sind, lässt sich ein Zerspanungswerkzeug herstellen, das sich gegenüber herkömmlichen Zerspanungswerkzeugen aus Metall- oder Keramikbasis durch ein geringeres Gewicht auszeichnet. Gleichzeitig lassen sich durch Verwendung eines den speziellen Anforderungen an den jeweiligen Funktionsabschnitt Rechnung tragenden faserverstärkten Kunststoffs und eine entsprechende Verarbeitung, insbesondere Faserdichte und Faserorientierung, die erforderlichen Eigenschaften hinsichtlich Steifigkeit, Schlagfestigkeit und Schwingungs- und Geräuschdämpfung erzielen. Bevorzugte faserverstärkte Kunststoffe sind zumindest für ein einstückig aufgebautes Zerspanungswerkzeug stranggezogene CFK-Rundstäbe mit in eine Kunstharzmatrix eingebetteten Kurzfasern, die im Wesentlichen unidirektional in Längsrichtung des Zerspanungswerkzeugs ausgerichtet sind. Zu den vorgenannten Eigenschaften kommt hinzu, dass sich derartige faserverstärkte Kunststoffe leichter bearbeiten lassen als die herkömmlich verwendeten Werkstoffe auf Metall- oder Keramikbasis.

Der erfindungsgemäße Schneideinsatzträger (bei einstückigem Aufbau) bzw. der zumindest eine Funktionsabschnitt des Schneideinsatzträgers (bei mehrteiligem Aufbau) kann auf der Basis eines aus einem faserverstärkten Kunststoff hergestellten Werkzeugrohlings hergestellt werden. So kann bei einem einstückig aufgebauten Schneideinsatzträger des Zerspanungswerkzeugs in den Werkzeugrohling im Bereich des Schneidteils die für die Aufnahme des Schneideinsatzes erforderliche Passungsnut samt Gegenflächen für die Grundfläche und die Mantelflächenanordnung des Schneideinsatzes z. B. durch Einschleifen, eingearbeitet sein, während im Bereich eines Werkzeug-Grundkörpers der Werkzeugrohling für die Aufnahme und Spannung in einer Werkzeugaufnahme bearbeitet ist. Bei einem mehrteilig aufgebauten Zerspanungswerkzeug ist der Werkzeugrohling nur hinsichtlich der dem jeweiligen Funktionsabschnitt zugedachten Funktionen entsprechend bearbeitet.

Bei dem Schneideinsatzträger kann es sich um ein zylindrisch gewickeltes Laminat handeln, d. h. der Schneideinsatzträger kann aus mehreren in eine Kunstharzmatrix eingebetteten Fasergeweben gebildet sein, die beispielsweise um einen Kern aus Vollharzmaterial oder einen Hohlkern zylindrisch gewickelt sind. Bei dem Schneideinsatzträger kann es sich aber auch um ein Spritzguss-, Spritzpress- oder Strangziehteil handeln. Schneideinsatzträger, die nach einem der letztgenannten Verfahren, insbesondere durch Strangziehen, hergestellt sind, zeichnen sich durch in eine Matrix aus Kunstharz eingebettete Kurzfasern aus und haben daher gegenüber den meist nur Langfasern enthaltenden Laminaten den Vorteil, dass sich auch bei kleinen Durchmessern klar umrissene Flächen, beispielsweise eine Mitnehmerfläche, und definierte Kanten, beispielsweise eine Haupt- und Nebenschneidkanten, exakt ausbilden lassen.

Selbstverständlich wird der für die Werkzeugherstellung verwendete faserverstärkte Kunststoffwerkstoff unter Berücksichtigung der jeweils zu erwartenden Anforderungen, z. B. hinsichtlich Festigkeit und Steifigkeit, entsprechend gewählt. Bevorzugt werden für die einstückig gefertigten Zerspanungswerkzeuge daher CFK- und CFC-Werkstoffe verwendet.

Der Schneidteil kann einen oder mehrere Schneidkörper umfassen. Der Schneidteil kann daher einstückig ausgebildet sein oder mehrere Schneidkörper z. B. in Form von Schneidplatten oder Schneidleisten umfassen. In jedem Fall lassen sich bei dieser Bauweise verschiedene Materialien mit verschiedenen Eigenschaften hinsichtlich Härte, Schwingungsdämpfung, Gewicht, Temperaturbeständigkeit, etc. zweckmäßig und vorteilhaft miteinander kombinieren. Beispielsweise kann der Schneidteil oder können die Schneidkörper aus einem Stahlwerkstoff, Hartmetall oder einem Keramikverbundwerkstoff hergestellt sein. Die Schneidkörper können auf den Grundkörper oder einem mit dem Grundkörper verbundenen Trägerkörper angeordnet, beispielsweise geklebt sein. Bei dem Trägerkörper kann es sich beispielsweise um eine Kassette handeln, auf der ein Schneid körper, z. B. eine Schneidplatte, beispielsweise verstellbar befestigt ist. Der Grundkörper und/oder der Trägerkörper können aus einem faserverstärkten Kunststoff hergestellt sein. Die Klebung der Schneidkörper an einem Werkstoff aus faserverstärktem Kunststoff ist einfach und zuverlässig zu realisieren. Alternativ dazu können die Schneidkörper am Grundkörper oder Trägerkörper aber auch angeschraubt sein oder mittels Spannpratzen gehalten werden.

Die Verwendung eines faserverstärkten Kunststoffs für zumindest einen der Funktionsabschnitte eines Zerspanungswerkzeugs gestattet die Vorsehung eines internen Kühl- und/oder Schmiermittelzufuhrkanalsystems. Insbesondere dann, wenn dieses Kühl- und/oder Schmiermittelzufuhrkanalsystem durch den aus dem faserverstärkten Kunststoff gebildeten Funktionsabschnitt geht, vereinfacht sich die Ausbildung gegenüber herkömmlichen Stahl- oder Keramikwerkstoffen enorm

Wenn gemäß Anspruch 3 die Passungsnut zumindest abschnittsweise zur Verklebung genutzt wird, lässt sich die Haltekraft und die Standzeit des Werkzeugs erhöhen und gleichzeitig das Laufgeräusch weiter verringern.

Die Klebeschicht kann in verschiedenster Form ausgeführt werden. Wenn sie von einer Klebefolie oder von einem Klebeaufdruck gebildet ist, lassen sich mit geringem montagetechnischen Aufwand extrem dünne Klebstoffschichten realisieren, die in der Größenordnung der Fertigungs- und Lagetoleranz der Werkzeugschneiden liegen, so dass das Werkzeug nach dem Einfügen der Schneideinsätze keiner Endbearbeitung mehr zugeführt werden muss.

Der Schneideinsatz kann auch schichtweise aufgebaut sein, wobei die Schneidstoffschicht nur einen Bruchteil der Gesamtdicke des Schneideinsatzes ausmacht. Gemäß Anspruch 6 hat der Schneideinsatz einen Aufbau, bei dem die Dicke (DS) einer Schneidstoffschicht zwischen 20 und 70%, vorzugsweise zwischen 45 und 55% der Gesamtdicke (DE) des Schneideinsatzes (16) entspricht. Auf diese Weise ergeben sich mehr Möglichkeiten hinsichtlich der Auswahl des Klebstoffs zwischen der die Schneidstoffschicht tragenden Komponente und dem Schneideinsatzträger.

Wenn der Schneideinsatzträger einstückig gefertigt ist, ergibt sich eine größere Stabilität des Werkzeugs.

Das Werkzeug kann im Bereich des Schneideinsatzträgers auch mehrteilig aufgebaut ist, wobei zumindest ein den Schneideinsatzträger tragender Grundkörper aus einem faserverstärkten Kunststoff gebildet ist.

In diesem Fall ist es von Vorteil, wenn der Schneideinsatzträger kraft- und/oder formschlüssig mit dem Grundkörper oder einem zwischen den Grundkörper und dem Schneideinsatzträger angeordneten Trägerkörper verbunden ist.

Mit einem internen Kühl- und/oder Schmiermittelzufuhrkanalsystem nach Anspruch 11 lässt sich die Standzeit der Werkzeugschneiden extrem verbessern, insbesondere wenn die Kühl-/Schmiermittelzufuhr zum Abtransport der Späne herangezogen wird.

Wenn im Bereich der Schneiden oder des Schneideinsatzträgers ein faserverstärkter Kunststoff verwendet wird, ist es von Vorteil, wenn dieser kohlenstofffaserverstärkten Kunststoff (CFK) und kohlenstofffaserverstärkten Kohlenstoff (CFC) umfasst.

Erfindungsgemäß hat die Klebstoffschicht eine Dicke, die im Bereich der Maßhaltigkeitstoleranz der Werkzeugschneide z.B. zwischen 5 und 100 µm liegt. Der Schneideinsatz wird mit dem Schneideinsatzträger so gefügt, dass keine nachträgliche Bearbeitung der Schneiden auf Endmaß erforderlich ist.

Wenn, gemäß Anspruch 13, die Passungsnut und/oder zumindest eine den Schneideinsatz lagemäßig fixierende Anlagefläche des Schneideinsatzträgers zumindest eine Tasche aufweist, kann eine sich während des Montagevorgangs als überschüssig erweisende Klebstoffmenge problemlos darin aufgenommen werden, so dass sich montagebedingte Lageverschiebungen der Schneide minimal halten lassen.

Mit dem vorstehend beschriebenen Aufbau des Werkzeugs lässt sich folgendes Herstellungsverfahren realisieren, das sich durch eine besonders hohe Präzision und gute Wirtschaftlichkeit auszeichnet:
Ein auf Endmaß bearbeiteter plattenförmiger Schneideinsatz, der zumindest abschnittsweise aus schlag- und/oder verschleißfestem Schneidstoff besteht und eine Form hat, die im Wesentlichen einem Prisma folgt, wird zunächst mit der Grundfläche seines Prismas unter Zwischenschaltung einer Klebstoffschicht auf eine Auflagefläche des Schneideinsatzträgers aufgelegt. Jetzt kann der Schneideinsatz auf dieser Auflagefläche in eine der Schneidkante bzw. Haupt-Schneidkante im Wesentlichen gegenüberliegende Passungsnut des Schneideinsatzträgers so weit eingeschoben werden, bis eine an die Schneidkante angrenzende Mantelflächenanordnung des Prismas zur räumlichen Festlegung der Schneide an entsprechenden Gegenflächen des Schneideinsatzträgers, d.h. mit vorbestimmten Anlagepunkten zur genauen und reproduzierbaren Festlegung der Schneide, anschlägt. Daraufhin wird der Aushärteprozess des Klebstoffs unter Aufrechterhaltung des lagefixierenden Anschlags durchgeführt .

Nachfolgend werden anhand schematischer Zeichnungen mehrere Ausführungsbeispiele der Erfindung näher beschrieben. Es zeigen:
Fig. 1 eine schematische perspektivische Ansicht eines Ausschnitts der Stirnseite eines erfindungsgemäßen drehantreibbaren Zerspanungswerkzeugs in der Ausgestaltung als vierschneidiges Senk-Formwerkzeug;
Fig. 2 eine schematische perspektivische Ansicht eines Ausschnitts der Stirnseite eines weiteren erfindungsgemäßen drehantreibbaren Zerspanungswerkzeugs in der Ausgestaltung als Reibahle;
Fig. 3 und 4 schematische perspektivische Ansichten eines Ausschnitts der Stirnseite weiterer erfindungsgemäßer drehantreibbarer Zerspanungswerkzeuge jeweils in der Ausgestaltung als Fräswerkzeug; und
Fig. 5 eine schematische ausschnittsweise Seitenansicht einer weiteren Ausführungsform der Erfindung.

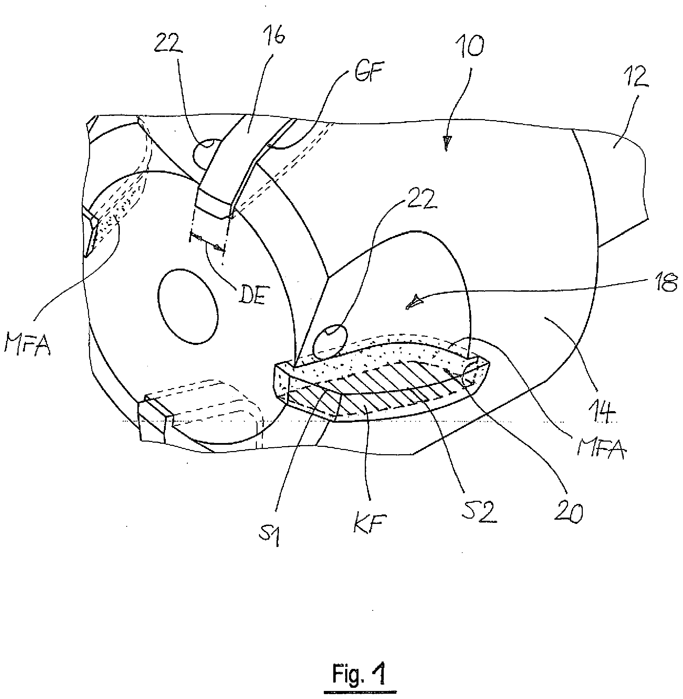

In Fig. 1 ist mit dem Bezugszeichen 10 ein drehangetriebenes Zerspanungswerkzeug in der Ausgestaltung als Form-Senkwerkzeug bezeichnet, dessen Schaft 12 ein Schneidteil 14 hat. Das Schneidteil 14 ist im Wesentlichen zylindrisch ausgebildet und derart bearbeitet, dass es eine Vielzahl von plättchen- oder plattenförmigen Schneideinsätzen 16 positionsgenau tragen kann. Für die Schneideinsätze 16 sind im Schneidteil 14, der im Folgenden auch Schneideinsatzträger bezeichnet wird, Taschen 18 ausgebildet.

Die Schneideinsätze 16 bestehen insgesamt oder zumindest in der die Schneiden S1, S2 bildenden Schicht aus schlag- und/oder hochverschleißfestem Schneidstoff, wie z.B. polykristallinem Diamant (PKD), Cubic Boron Nitride (CBN), CVD-Diamant oder einem Cermet-Werkstoff. Es ist jedoch auch möglich den Schneidstoff aus der Gruppe der CFK- oder CFC-Werkstoffe zu wählen.

Die lagegenaue Positionierung für jeden Schneideinsatz 16 muss derart erfolgen, dass der wirksame Außendurchmesser ebenso wie die Lage und Ausrichtung der Hauptschneiden S1 und S2 in einem engen Toleranzbereich sichergestellt ist. Hierzu ist folgende Anordnung getroffen:
Der Schneideinsatz 16 hat eine Form, die im Wesentlichen einem Prisma ähnelt bzw. folgt, d.h. er hat zwei planparallele Oberflächen und eine dazwischen liegende Mantelfläche, die von im Wesentlichen parallelen Erzeugenden gebildet ist. Der Schneideinsatz 16 ist in der Weise am Schneiden- bzw. Schneideinsatzträger 14 festgelegt, dass zumindest eine Grundfläche GF des Prismas mit dem Schneideinsatzträger 14 im Wesentlichen vollflächig über die in Figur 1 schraffiert dargestellte Fläche KF verklebt wird. Eine an die Schneidkante S2 angrenzende Mantelflächenanordnung MFA des Prismas, die in Figur 1 mit Punktraster gekennzeichnet ist, wird zur räumlichen Festlegung der Schneiden S1 du S2 am Werkzeug 10 herangezogen. Mit anderen Worten, für die Mantelflächenanordnung MFA werden am Schneideinsatzträger 14 Gegenflächen ausgebildet, die so gefertigt sind und auf die Form des Schneideinsatzes 16 abgestimmt sind, dass der Schneideinsatz 16 nur in einer ganz bestimmten Anschlagposition am Schneideinsatz festgelegt werden kann, wobei in dieser Position die räumliche Ausrichtung der Schneiden S1 und S2 eindeutig feststeht.

Zusätzlich wird ein den Schneidkanten S1 und S2 im Wesentlichen gegenüberliegender Abschnitt der Mantelflächenanordnung in einer Passungsnut 20 des Schneideinsatzträgers 14 entweder spielfrei oder mit geringstmöglicher Spielpassung gefangen. Im gezeigten Ausführungsbeispiel folgt die Passungsnut 20 einer Kurve, da auch die Schneiden S1 und S2 in zwei voneinander abweichenden Richtungen verlaufen.

Mit dem Bezugszeichen 22 ist die Mündungsöffnung eines Kanals eines innenliegenden Kühl-/Schmiermittelversorgungssystems angedeutet.

Eine besonders hohe Positioniergenauigkeit lässt sich dann erzielen, wenn die Klebeschicht formstabil und mit genau festgelegter Dicke ausgeführt wird. Dies erreicht man durch Verwendung einer Klebefolie oder eines Klebeaufdrucks, dessen Dicke im Bereich der Maßhaltigkeitstoleranz der Werkzeugschneide liegt, z.B. zwischen 5 und 100 µm.

Der besondere Vorteil dieser Anordnung besteht darin, dass zur Herstellung der dreidimensional lagefesten Verbindung zwischen Schneideinsatz 16 und Schneidenträger 14 eine definierte Anlage des Schneideinsatzes 16 am Schneidenträger 14 genutzt werden kann, wodurch die Herstellgenauigkeit und die Wirtschaftlichkeit des Herstellungsverfahrens des Werkzeugs grundsätzlich verbessert wird. Weil zur Herstellung der Klebeverbindung selbst für den Fall, dass ein sogenannter Thermokleber zum Einsatz kommt, keine Prozesstemperaturen erforderlich sind, die in die Nähe eines Schmelzpunktes eines Lötmetalls kommen, werden thermisch bedingte Verspannungen und Lageungenauigkeiten (bedingt durch unterschiedliche Temperaturen des Schneideinsatzes und des Schneidenträgers bei der Endmontage) von vorne herein vermieden. Weil darüber hinaus bei einer Klebeverbindung mit größerer Sicherheit dafür Sorge getragen werden kann, dass die gesamte Kontaktfläche an der Verbindung teilnimmt, wird der Schneideinsatz auch bei sehr hohen Schnittkräften ausreichend zuverlässig unterstützt und damit vor Überbeanspruchungen gesichert.

Erfindungsgemäß übernimmt nach wie vor eine Grundfläche des Prismas, nämlich im Bereich der Fläche KF über die im Wesentlichen vollflächige Verklebung die hauptsächliche Stütz- und Fixierungsfunktion. Gleichzeitig wird jedoch eine an die Schneidkante bzw. Haupt-Schneidkante angrenzende Mantelflächenanordnung des Prismas dazu genutzt, die Lage der Schneide im Raum, d.h. bezüglich der Werkzeughalterung eindeutig, d.h. durch definierte Anlagepunkte, räumlich fest zu legen. Dies gelingt deshalb, weil sich der Schneideinsatz 16 auf der Auflagefläche KF unter Zwischenschaltung des Klebstoffs problemlos bis in eine statisch bestimmte Anschlagposition verschieben lässt. Bei dieser Verschiebung gleitet ein der Schneidkante S1, S2 im Wesentlichen gegenüberliegender Abschnitt der Mantelflächenanordnung in die Passungsnut 20 des Schneideinsatzträgers 14, in der der Schneideinsatz schließlich fest, d.h. ohne Spiel gefangen bleibt. Auf diese Weise kann einem von der an der Hauptschneide einwirkendenSchnittkraft hervorgerufenen Kippmoment wirksam entgegengewirkt werden. Dies entlastet die Klebeverbindung. Die Passungsnut 20 wirkt also wie eine Einspannstelle, mit der es gelingt, die Dauerfestigkeit der Fügeverbindung zwischen Schneideinsatz 16 und Schneideinsatzträger 14 wesentlich anzuheben.

Bei der Ausführungsform nach Figur 1 erfolgt die Verklebung ausschließlich über die Fläche KF. Es kann jedoch auch die Mantelflächenanordnung MFA zusätzlich zur Verklebung genutzt werden, wobei es in diesem Fall von Vorteil ist, wenn im Bereich der Anlage-Gegenflächen im Schneideinsatzträger, d.h. im Bereich der Passungsnut 20 zumindest eine Tasche vorgesehen wird, in der bei der Montage verschobener überschüssiger Klebstoff aufgenommen werden kann, damit der Schneideinsatz in jedem Fall in die vorgesehene Anschlagposition gelangt.

Es hat sich darüber hinaus gezeigt, dass die Klebstoffschicht - auch wenn deren Dicke in einem Bereich gehalten wird, der in der Größenordnung der Lagetoleranz für die Schneide, also im 1/100-stel mm-Bereich, gehalten wird - eine stoßdämpfende Wirkung hat, so dass Kraftspitzen, die an der Schneide und in der Passungsnut auftreten, wirksam geglättet werden. Hierdurch ergibt sich nicht nur eine größere Laufruhe und eine verringerte Schwingungsneigung des Werkzeugs, sondern gleichzeitig eine verbesserte Standzeit des Werkzeugs.

Die erfindungsgemäße Fügetechnik erlaubt es sogar, den Schneideinsatz aus einem CFK- oder CFC-Material zu fertigen, insbesondere dann, wenn auch der Schneideinsatzträger 14 zumindest bereichsweise aus einem solchen Material besteht. Die Verwendung dieses Materials für den Schneideinsatzträger dämpft nicht nur die Schwingungen, sondern glättet die Kraftspitzen, die an den Hauptschneiden S1 und S2 auf den Schneideinsatz einwirken, so dass auch sprödere Werkstoffe für die Schneideinsätze zur Anwendung kommen können.

Der Klebstoff für die Herstellung der Klebeverbindung kann z.B. von einem Acrylat-Klebstoff auf Dimethacrylatester-Basis gebildet sein, wie z. B. LOCTITE 2701. Dieser Klebstoff wird unter der Marke der Firma Henkel AG & Co. KGaA gehandelt. Einzelheiten der Materialeigenschaften sind dem Technischen Datenblatt Juni 2004 entnehmbar, das unter http://65.213.72.112/tds5/docs/2701-DE.PDF abrufbar ist.

Dieser Klebstoff hat den Vorteil, dass er schnell aushärtet und eine hohe Festigkeit und Temperaturbeständigkeit hat. Gleichwohl ist dieser Klebstoff bei Temperaturen über 200°C aufweichbar, so dass die Verbindung zwischen Schneideinsatz 16 und Schneideinsatzträger bei Bedarf ohne Beschädigungsgefahr wieder aufgehoben werden kann.

Vorteilhafterweise werden die Fügeflächen vor der Herstellung der Verbindung mit einem Reinigungsmittel gereinigt, das auf Aceton-Basis aufgebaut ist. Hierbei kann es sich beispielsweise um LOCTITE 7061 (Marke der Firma Henkel AG & Co. KG auf Aktien) handeln. Einzelheiten können dem technischen Datenblatt LOCTITE 7061 vom Juli 2008 entnommen werden, das z.B. unter der Web-Adresse http://65.213.72.112/tds5/docs/7061-DE.PDF abrufbar ist.

Der Schneideinsatz kann - je nach verwendetem hochverschleißfestem Schneidstoff - unterschiedlich aufgebaut sein. Vorzugsweise ist der Aufbau derart gewählt, dass die Dicke einer Schneidstoffschicht DS zwischen 20 und 70%, vorzugsweise zwischen 45 und 55% der Gesamtdicke DE des Schneideinsatzes 16 entspricht. Mit anderen Worten, die Schneidstoffschicht liegt beispielsweise auf einer gleichdicken Unterlage beispielsweise aus Hartmetall, auf die die Schneidstoffschicht, wie zum Beispiel eine polykristalline Diamantschicht oder eine CBN-Schicht während eines Sinterprozesses gebunden wird.

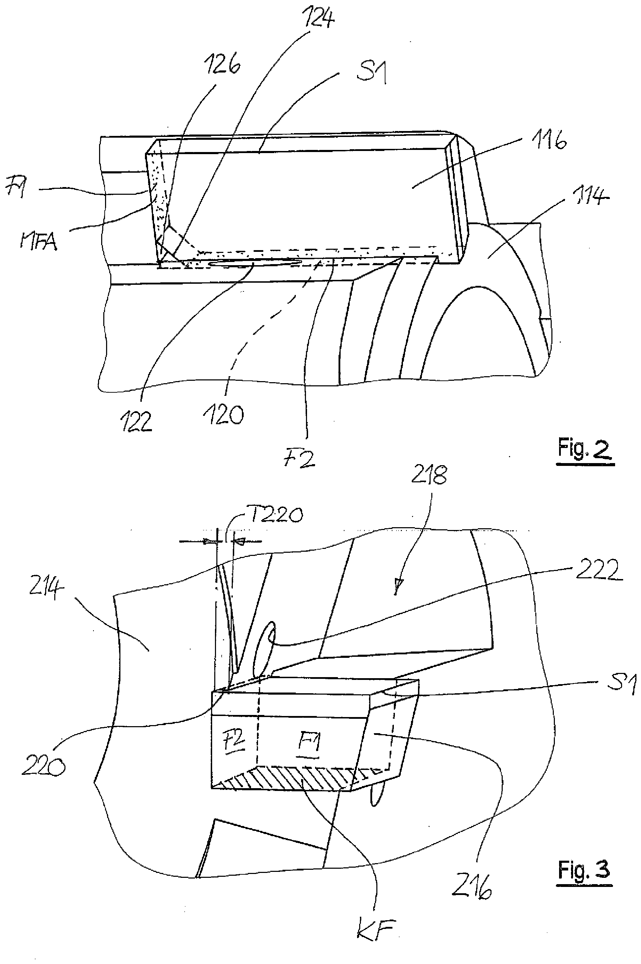

Die Figuren 2 bis 5 zeigen weitere Ausgestaltungen der Erfindung. Zur Vereinfachung der Beschreibung werden diejenigen Komponenten, die den Bestandteilen der vorstehend beschriebenen Ausführungsform entsprechen, mit ähnlichen Bezugszeichen versehen, denen jedoch eine "1", "2", "3" bzw. "4" vorangestellt ist.

Fig. 2 zeigt ausschnittsweise eine Reibahle, die am Schneideinsatz 116 eine axial ausgerichtete Schneidkante S1 hat. Deshalb genügt auf Seiten des Schneideinsatzträgers 114 auch eine lineare Passungsnut 120, in der ein linearer der Schneidkante S1 gegenüberliegender Abschnitt der Mantelflächenanordnung lagegenau gefangen ist. Über die Passungsnut 120 und eine im Winkel dazu stehende Mantelflächenanordnung MFA, die an die Schneidkante S1 angrenzt, wird die Lage der Schneide S1 in allen drei Koordinaten festgelegt. Um Zwängungen bei der Montage zu vermeiden, besitzt der Schneideinsatz 116 zwischen den Mantelflächen F1 und F2 eine Anfasung 124, so dass im montierten Zustand des Schneideinsatzes im innenliegenden Eckbereich der Passungsnut 120 ein freier Raum 126 verbleibt.

Figur 3 zeigt die Verwirklichung der Erfindung am Beispiel eines Fräswerkzeugs. Die Positionierung der Schneidkante S1 erfolgt über die Flächen F1 und F2, wobei die Fläche F2 in der Passungsnut 220 zu liegen kommt, die eine verhältnismäßig kleine Tiefe T220.

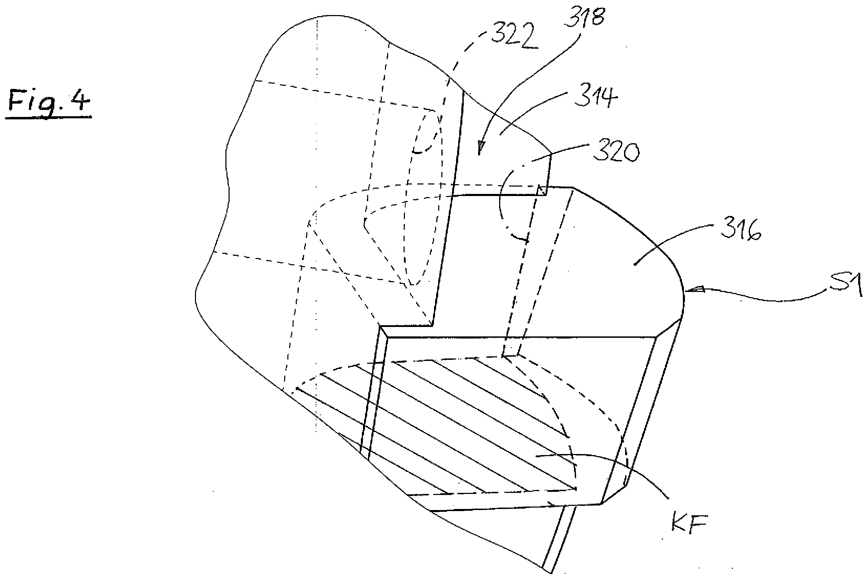

Eine ähnliche Konstellation zeigt die Figur 4, bei der jedoch die Schneide S1 des Fräser-Schneideinsatzes 316 eine komplexere Formgebung hat. Dementsprechend ist auch die Passungsnut 320 so einer Kurve folgend geformt, dass sie den an der Schneide S1 auftretenden Schnittkräften ein Gegen-Moment entgegensetzen kann, so dass die Normalkräfte im Bereich der Klebefläche KF begrenzt werden. Diese Gestaltung der Passungsnut ist derjenigen der Figur 1 ähnlich.

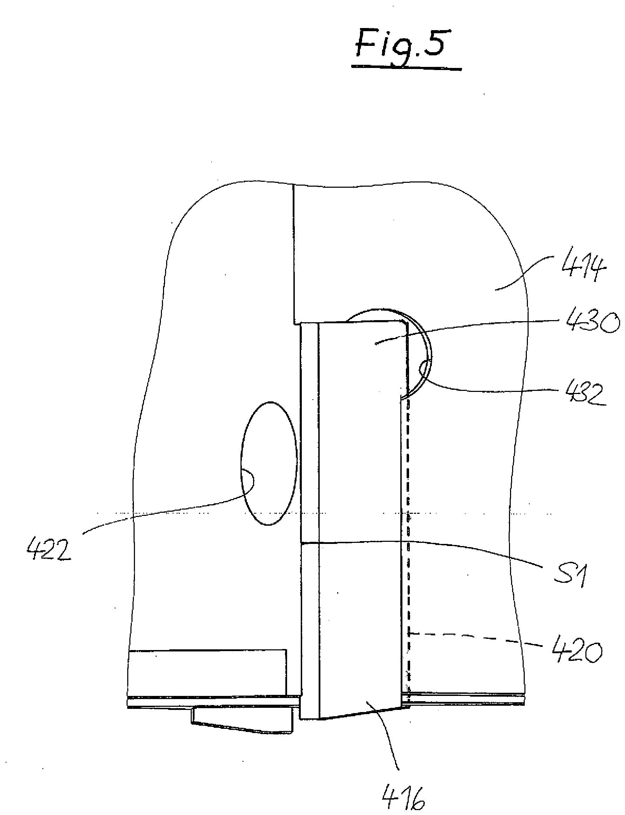

Die Figur 5 schließlich zeigt eine Ausführungsform, die derjenigen der Figur 2 ähnlich ist, mit der Besonderheit, dass für das innenliegende Eck 430 des Schneideinsatzes 416 eine Freifräsung 432 im Schneideinsatzträger vorgesehen ist.

Selbstverständlich sind Abwandlungen von den beschriebenen Ausführungsformen möglich, ohne den Grundgedanken der Erfindung zu verlassen. Beispielsweise kann die Klebeschicht auf beliebige Art und Weise aufgetragen werden. Um eine exakte Positionierung der Schneide in der Montage-Endstellung zu fördern, ist es allerdings von Vorteil, eine Klebefolie oder einen Klebeaufdruck zu verwenden.

Das Werkzeug kann auch ein nicht drehend antreibbares Werkzeug sein. Der Schneideinsatz kann nach erfolgter Verklebung auch einer Endbearbeitung unterzogen werden.

Die feste Einspannung in der Passungsnut kann auch unter Zuhilfenahme einer dickeren Klebstoffschicht realisiert bzw. verbessert werden.

Für den Schneideinsatz können unterschiedlichste Strukturen Anwendung finden, je nach dem, welcher Hart-Schneidstoff oder welcher faserverstärkte Kunststoff verwendet wird. Wenn die Dicke der Schneidstoffschicht zwischen 20 und 70%, vorzugsweise zwischen 45 und 55% der Gesamtdicke des Schneideinsatzes entspricht wird das Plättchen zusätzlich stabilisiert, wodurch es für ein erweitertes Einsatzgebiet in Frage kommt.

Es ist auch möglich, die Fügeflächen bei Bedarf einer Oberflächenbehandlung zu unterziehen, wenn damit die Haftung über die Klebstoffschicht verbessert werden kann.

## Patentansprüche

1. Spanabhebendes Werkzeug mit zumindest einem plattenförmigen Schneideinsatz (16; 116; 216; 316; 416), der zumindest abschnittsweise aus schlag- und/oder verschleißfestem Schneidstoff besteht und über eine Kontaktflächenanordnung unverrückbar mit einem Schneideinsatzträger (14; 114; 214; 314; 414) direkt über eine Klebeschicht verklebt ist, wobei der Schneideinsatz eine Form hat, die im Wesentlichen einem Prisma folgt, und wobei der Schneideinsatz derart am Schneideinsatzträger festgelegt ist, dass ein einer Schneidkante (S1, S2) im Wesentlichen gegenüberliegender Abschnitt (F2) einer Mantelflächenanordnung (MFA) des Prismas in einer Passungsnut (20; 120; 220; 320; 420) des Schneideinsatzträgers (14; 114; 214; 314; 414) gefangen ist, wobei
a) eine Grundfläche (GF) des Prismas mit dem Schneideinsatzträger (14; 114; 214; 314; 414) im Wesentlichen vollflächig verklebt wird, **dadurch gekennzeichnet, dass**
b) die an die Schneidkante (S1, S2) angrenzende Mantelflächenanordnung (MFA; F1, F2) des Prismas zur räumlichen Festlegung der Schneide (S1, S2) am Werkzeug in der Weise herangezogen wird, dass die Lage der Schneide im Raum ohne weitere Bearbeitung im vorgeschriebenen Toleranzbereich festliegt, indem als Klebeschicht eine Klebefolie oder ein Klebeaufdruck verwendet wird, dessen Dicke im Bereich der Maßhaltigkeitstoleranz der Werkzeugschneide liegt, z.B. zwischen 5 und 100 µm.

2. Werkzeug nach Anspruch 1, **dadurch gekennzeichnet, dass**, der Schneidstoff von polykristallinem Diamant (PKD), Cubic Boron Nitride (CBN), CVD-Diamant, einem Cermet-Werkstoff oder einem faserverstärkten Kunststoff gebildet ist.

3. Werkzeug nach Anspruch 1 oder 2, **dadurch gekennzeichnet, dass** die Passungsnut (20; 120; 220; 320; 420) zumindest abschnittsweise zur Verklebung genutzt wird.

4. Werkzeug nach einem der Ansprüche 1 bis 3, **dadurch gekennzeichnet, dass** der Schneideinsatz einen Aufbau hat, bei dem die Dicke einer Schneidstoffschicht zwischen 20 und 70%, vorzugsweise zwischen 45 und 55% der Gesamtdicke (DE) des Schneideinsatzes (16; 116; 216; 316; 416) entspricht.

5. Werkzeug nach einem der Ansprüche 1 bis 4, **dadurch gekennzeichnet, dass** der Schneidenträger von einem Werkzeugkörper gebildet ist.

6. Werkzeug nach einem der Ansprüche 1 bis 3, **dadurch gekennzeichnet, dass** der Schneidenträger von einer Schneidplatte gebildet ist.

7. Werkzeug nach einem der Ansprüche 1 bis 6, **dadurch gekennzeichnet, dass** der Schneideinsatzträger (14; 114; 214; 314; 414) und/oder der Schneideinsatz (16; 116; 216; 316; 416) zumindest teilweise, vorzugsweise vollkommen aus einem faserverstärkten Kunststoff gebildet sind.

8. Werkzeug nach einem der Ansprüche 1 bis 7, **dadurch gekennzeichnet, dass** der Schneideinsatzträger einstückig gefertigt ist.

9. Werkzeug nach einem der Ansprüche 1 bis 7, **dadurch gekennzeichnet, dass** es mehrteilig aufgebaut ist, wobei zumindest ein ein Schneidteil tragender Grundkörper aus einem faserverstärkten Kunststoff gebildet ist.

10. Werkzeug nach Anspruch 9, **dadurch gekennzeichnet, dass** der Schneidteil kraft- und/oder formschlüssig mit dem Grundkörper oder einem zwischen den Grundkörper und dem Schneidteil angeordneten Trägerkörper verbunden ist.

11. Werkzeug nach einem der Ansprüche 1 bis 10, **gekennzeichnet durch** ein internes Kühl- und/oder Schmiermittelzufuhrkanalsystem (22; 122; 222; 322; 422).

12. Werkzeug nach einem der Ansprüche 1 bis 11, **dadurch gekennzeichnet, dass** der faserverstärkte Kunststoff kohlenstofffaserverstärkten Kunststoff (CFC) und kohlenstofffaserverstärkten Kohlenstoff (CFC) umfasst.

13. Werkzeug nach einem der Ansprüche 1 bis 12, **dadurch gekennzeichnet, dass** die Passungsnut (20; 120; 220; 320; 420) und/oder zumindest eine den Schneideinsatz (16; 116; 216; 316; 416) lagemäßig fixierende Anlagefläche des Schneideinsatzträgers (14; 114; 214; 314; 414) zumindest eine Tasche aufweist, in der während des Montagevorgangs überschüssiger Klebstoff aufnehmbar ist.

14. Verfahren zur Herstellung eines Werkzeugs nach einem der Ansprüche 1 bis 13, bei dem
ein auf Endmaß bearbeiteter plattenförmiger Schneideinsatz (16; 116; 216; 316; 416), der zumindest abschnittsweise aus schlag- und/oder verschleißfestem Schneidstoff besteht und eine Form hat, die im Wesentlichen einem Prisma folgt, mit der Grundfläche (GF) seines Prismas unter Zwischenschaltung einer Klebefolie oder eines Klebeaufdrucks, dessen Dicke im Bereich der Maßhaltigkeitstoleranz der Werkzeugschneide liegt, auf eine Auflagefläche des Schneideinsatzträgers (14; 114; 214; 314; 414) aufgelegt und
auf dieser Auflagefläche in eine der Schneidkante (S1, S2) im Wesentlichen gegenüberliegende Passungsnut (20; 120; 220; 320; 420) des Schneideinsatzträgers (14; 114; 214; 314; 414) so weit eingeschoben wird, bis eine an die Schneidkante (S1, S2) angrenzende Mantelflächenanordnung (MFA) des Prismas zur räumlichen Festlegung der Schneide (S1, S2) an entsprechenden Gegenflächen des Schneideinsatzträgers (14; 114; 214; 314; 414) anschlägt, so dass die Lage der Schneide im Raum ohne weitere Bearbeitung im vorgeschriebenen Toleranzbereich festliegt, woraufhin
der Aushärteprozess des Klebstoffs unter Aufrechterhaltung des lagefixierenden Anschlags durchgeführt wird.

## Claims

1. Machining tool comprising at least one plate-shaped cutting insert (16, 116, 216, 316, 416), which is made of impact-resistant and/or wear-resistant cutting material at least in some sections and which is adhesively bonded to a cutting insert holder (14, 114, 214, 314, 414) directly by means of an adhesive layer in an immovable manner by means of a contact surface arrangement, wherein the cutting insert is substantially prism-shaped, and wherein the cutting insert is fixed on the cutting insert holder such that a section (F2) of an outer surface arrangement (MFA) of the prism substantially opposite a cutting edge (S1, S2) is caught in a fitting groove (20, 120, 220, 320, 420) of the cutting insert holder (14, 114, 214, 314, 414), wherein
a) a base area (GF) of the prism is adhesively bonded to the cutting insert holder (14, 114, 214, 314, 414) substantially over the full area, **characterised in that**
b) the outer surface arrangement (MFA; F1, F2) of the prism adjacent to the cutting edge (S1, S2) for spatially fixing the cutter (S1, S2) is drawn to the tool such that the position of the cutter is spatially fixed, without further machining, within the specified tolerance range, while an adhesive film or an adhesive imprint is used as the adhesive layer, the thickness of which lies within the dimensional accuracy tolerance range of the tool cutting edge, e.g. between 5 µm and 100 µm.

2. Tool according to claim 1, **characterised in that** the cutting material is formed from polycrystalline diamond (PKD), cubic boron nitride (CBN), CVD diamond, a cermet material or a fibre reinforced plastic.

3. Tool according to claim 1 or 2, **characterised in that** the fitting groove (20, 120, 220, 320, 420) is used for bonding at least in some sections.

4. Tool according to any of claims 1 to 3, **characterised in that** the cutting insert has a structure in which the thickness of a cutting material layer corresponds to between 20% and 70%, preferably between 45% and 55%, of the total thickness (DE) of the cutting insert (16, 116, 216, 316, 416).

5. Tool according to any of claims 1 to 4, **characterised in that** the cutter holder is formed from a tool body.

6. Tool according to any of claims 1 to 3, **characterised in that** the cutter holder is formed from a cutting plate.

7. Tool according to any of claims 1 to 6, **characterised in that** the cutting insert holder (14, 114, 214, 314, 414) and/or the cutting insert (16, 116, 216, 316, 416) is formed at least partially, preferably completely, from a fibre reinforced plastic.

8. Tool according to any of claims 1 to 7, **characterised in that** the cutting insert holder is manufactured in one piece.

9. Tool according to any of claims 1 to 7, **characterised in that** it is formed from multiple parts, wherein at least one base body supporting a cutting part is formed from a fibre reinforced plastic.

10. Tool according to claim 9, **characterised in that** the cutting part is connected in force-fitting and/or interlocking manner to the base body or to a support arranged between the base body and the cutting part.

11. Tool according to any of claims 1 to 10, **characterised by** an internal coolant and/or lubricant feed channel system (22, 122, 222, 322, 422).

12. Tool according to any of claims 1 to 11, **characterised in that** the fibre reinforced plastic comprises carbon fibre reinforced plastic (CFC) and carbon fibre reinforced carbon (CFC).

13. Tool according to any of claims 1 to 12, **characterised in that** the fitting groove (20, 120, 220, 320, 420) and/or at least a contact surface of the cutting insert holder (14, 114, 214, 314, 414) positionally fixing the cutting insert (16, 116, 216, 316, 416) has at least one pocket, in which excess adhesive can be received during the assembly process.

14. Method for producing a tool according to any of claims 1 to 13, in which a plate-shaped cutting insert (16, 116, 216, 316, 416), which has been machined to the final dimensions, which is made of impact-resistant and/or wear-resistant cutting material at least in some sections and is substantially prism-shaped, is applied with the base area (GF) of its prism by means of an adhesive film or an adhesive imprint, the thickness of which lies within the dimensional accuracy tolerance range of the tool cutting edge, onto a contact surface of the cutting insert holder (14, 114, 214, 314, 414) and is inserted on this contact surface into a fitting groove (20, 120, 220, 320, 420) of the cutting insert holder (14, 114, 214, 314, 414) substantially opposite the cutting edge (S1, S2) until an outer surface arrangement (MFA) of the prism adjacent to the cutting edge (S1, S2) abuts, for spatially fixing the cutter (S1, S2), against the corresponding mating surfaces of the cutting insert holder (14, 114, 214, 314, 414), such that the position of the cutter is spatially fixed, without further machining, within the specified tolerance range, whereupon the adhesive curing process is carried out while maintaining the position-fixing abutment.

## Revendications

1. Outil d'usinage par enlèvement de copeaux comprenant au moins un insert de coupe formant plaquette (16; 116; 216; 316; 416) qui se compose au moins par segments d'un matériau de coupe résistant aux chocs et/ou à l'usure et est collé à un support d'insert de coupe (14; 114; 214; 314; 414) directement par l'intermédiaire d'une couche adhésive, de manière fixe par un système de surface de contact, l'insert de coupe présentant une forme ayant sensiblement celle d'un prisme, et l'insert de coupe étant fixé sur le support d'insert de coupe de sorte qu'un segment (F2) essentiellement opposé à une arête de coupe (S1, S2) d'un système de surface extérieure (MFA) du prisme est pris dans une rainure d'adaptation (20; 120; 220; 320; 420) du support d'insert de coupe (14; 114; 214; 314; 414), moyennant quoi
a) une surface de base (GF) du prisme est collée sensiblement sur toute sa surface au support d'insert de coupe (14 ; 114 ; 214 ; 314 ; 414), **caractérisé en ce que**
b) le système de surface extérieure (MFA; F1, F2), qui jouxte l'arête de coupe (S1, S2), du prisme est tiré sur l'outil afin d'assurer la fixation spatiale de la plaquette (S1, S2), de sorte que la position de la plaquette dans l'espace est fixe sans autre usinage dans la plage de tolérance prescrite, en utilisant comme couche adhésive un film adhésif ou un imprimé adhésif dont l'épaisseur se situe dans la plage de tolérance dimensionnelle de la plaquette d'outil, par exemple entre 5 et 100 µm.

2. Outil selon la revendication 1, **caractérisé en ce que** le matériau de coupe est formé de diamant polycristallin (PKD), de nitrure de bore cubique (CBN), de diamant CVD, d'un matériau Cermet ou d'un matériau plastique renforcé de fibres de verre.

3. Outil selon la revendication 1 ou 2, **caractérisé en ce que** la rainure d'adaptation (20; 120; 220; 320; 420) est utilisée au moins par segments pour la liaison.

4. Outil selon l'une des revendications 1 à 3, **caractérisé en ce que**
l'insert de coupe présente une construction dans laquelle l'épaisseur d'une couche de matériau de coupe représente de 20 à 70 %, de préférence de 45 à 55 %, de l'épaisseur totale (DE) de l'insert de coupe (16 ; 116 ; 216 ; 316 ; 416).

5. Outil selon l'une des revendications 1 à 4, **caractérisé en ce que**
le support de coupe est formé d'un corps d'outil.

6. Outil selon l'une des revendications 1 à 3, **caractérisé en ce que**
le support de coupe est formé d'une plaque de coupe.

7. Outil selon l'une des revendications 1 à 6, **caractérisé en ce que**
le support d'insert de coupe (14; 114; 214; 314; 414) et/ou l'insert de coupe (16 ; 116 ; 216 ; 316 ; 416) sont formés au moins partiellement, de préférence entièrement d'un matériau plastique renforcé de fibres de verre.

8. Outil selon l'une des revendications 1 à 7, **caractérisé en ce que**
le support d'insert de coupe est fabriqué d'un seul tenant.

9. Outil selon l'une des revendications 1 à 7, **caractérisé en ce que**
il est construit en plusieurs parties, au moins un corps de base supportant une pièce de coupe est formé d'un matériau plastique renforcé de fibres de verre.

10. Outil selon la revendication 9, **caractérisé en ce que** la pièce de coupe est reliée par complémentarité de force et/ou de forme au corps de base ou à un corps de support agencé entre le corps de base et la pièce de coupe.

11. Outil selon l'une des revendications 1 à 10, **caractérisé par** un système de canal d'alimentation de réfrigérant et/ou de lubrifiant interne (22 ; 122 ; 222 ; 322 ; 422).

12. Outil selon l'une des revendications 1 à 11, **caractérisé en ce que**
le matériau plastique renforcé de fibres de verre comprend un matériau plastique renforcé de fibres de carbone (CFC) et du carbone renforcé de fibres de carbone (CFC).

13. Outil selon l'une des revendications 1 à 12, **caractérisé en ce que**
la rainure d'adaptation (20; 120; 220; 320; 420) et/ou au moins une surface d'appui fixant en position l'insert de coupe (16 ; 116 ; 216 ; 316 ; 416) du support d'insert de coupe (14; 114; 214; 314; 414) comporte au moins une poche dans laquelle l'excès de colle peut être réceptionné au cours du processus de montage.

14. Procédé de fabrication d'un outil selon l'une des revendications 1 à 13, dans lequel
un insert de coupe formant plaquette usiné à la dimension finale (16 ; 116 ; 216; 316 ; 416) qui se compose au moins par segments d'un matériau de coupe résistant aux chocs et/ou à l'usure et présente une forme qui suit sensiblement celle d'un prisme, repose avec la surface de base (GF) de son prisme avec intercalage d'un film adhésif ou d'un imprimé adhésif dont l'épaisseur se situe dans la plage de tolérance dimensionnelle de la plaquette de coupe, sur une surface d'appui du support d'insert de coupe (14 ; 114 ; 214 ; 314 ; 414) et
est introduit sur cette surface d'appui dans une rainure d'adaptation (20; 120; 220; 320; 420) sensiblement opposée à l'arête de coupe (S1, S2) du support d'insert de coupe (14 ; 114 ; 214 ; 314 ; 414) jusqu'à ce qu'un système de surface extérieure (MFA) du prisme, qui jouxte l'arête de coupe (S1, S2), afin d'assurer la fixation spatiale de la plaquette (S1, S2), bute contre des surfaces antagonistes correspondantes du support d'insert de coupe (14 ; 114 ; 214 ; 314 ; 414), de sorte que la position de la plaquette dans l'espace est fixée sans autre usinage dans la plage de tolérance prescrite, à la suite de quoi
le processus de durcissement de la colle est réalisé en conservant la butée de maintien en position.
